# EUROPEAN PATENT APPLICATION

(11) **EP 2 746 544 A1**
(43) Date of publication of application: **25.06.2014**
(21) Application number: 12199184.8
(22) Date of filing: 21.12.2012
(51) Int. Cl.: F01L 1/047, F01L 1/08, F02M 25/07

(54) **Camshaft and engine assembly for a diesel engine**

(71) Applicant: Perkins Engines Company Limited, Peterborough Cambridgeshire PE1 5NA (GB)
(72) Inventor: Page, Vivian, BOURNE, Lincolnshire PE10 95Q (GB); Stone, Michael, PETERBOROUGH, Cambridgeshire PE7 8DU (GB); Smith, David, WITTERING, Cambridgeshire PE8 6DX (GB); Ward, Timothy, WARBOYS, Cambridgeshire PE28 2SN (GB)
(74) Representative: Modiano, Micaela Nadia

(57) **Abstract**

A camshaft for a diesel engine is described. The camshaft may enable generation of suitable level of combustion residuals for the control of nitrogen oxide levels while minimising impact of the engine transient response. The camshaft may comprising a shaft body having a rotational axis, at least one exhaust cam for actuating an exhaust valve. An exhaust profile may be formed on the exhaust cam for actuating the exhaust valve to a first open position, the exhaust profile having an exhaust centre line. An EGR profile may be formed on the exhaust cam for actuating the exhaust valve to a second open position. The EGR profile has a maximum cam lift from 117.0° to 119.0° and a cam lift duration from 75.0° to 169.0° relative to the exhaust centre line.

## Description

### Technical Field

This patent disclosure relates generally to internal combustion engines and, more particularly, to a camshaft for use in diesel engines.

### Background

An internal combustion engine may employ various methods in order to operate under different conditions in an optimum manner and to reduce nitrogen oxides (NOx) contained in exhaust gas discharged from the combustion chambers thereof.

Exhaust Gas Recirculation systems may be provided in vehicles for the purpose of reducing nitrogen oxides emissions. Generally, a portion of the exhaust gas discharged from the combustion chambers may be recirculated through an exhaust recirculation passage to an intake passage and back to the engine cylinders. The recirculation of the residual exhaust gas may inhibit the formation of nitrogen oxides by mixing with the air-fuel mixture in the engine cylinders to lower the combustion temperature.

An internal combustion engine may typically have one or more camshafts for controlling a variety of valves and injectors. More particularly, a camshaft may include one or more cam lobes for driving rocker arms that actuate valves and injectors associated with a plurality of combustion cylinders.

The present disclosure is directed, at least in part, to improving or overcoming one or more aspects of the prior art system.

### Brief Summary of the Invention

In a first aspect, the present disclosure describes a camshaft for a diesel engine. The camshaft may comprise a shaft body having a rotational axis, at least one exhaust cam for actuating an exhaust valve; the at least one exhaust cam extending radially from the shaft body transversely to the rotation axis; an exhaust profile formed on the at least one exhaust cam for actuating the exhaust valve to a first open position, the exhaust profile having an exhaust centre line; and an EGR profile formed on the at least one exhaust cam for actuating the exhaust valve to a second open position, wherein the EGR profile has a maximum cam lift from 117.0⁰ to 119.0⁰ and a cam lift duration from 75.5⁰ to 169.0⁰ relative to the exhaust centre line.

In a second aspect, the present disclosure describes an engine assembly for a diesel engine. The engine assembly may comprise at least one exhaust valve assembly in communication with a cylinder, the at least one exhaust valve assembly comprising an exhaust valve; a camshaft comprising at least one exhaust cam for actuating an exhaust valve; the at least one exhaust cam extending radially from the shaft body transversely to the rotation axis; an exhaust profile formed on the at least one exhaust cam for actuating the exhaust valve to a first open position, the exhaust profile having an exhaust centre line; and an EGR profile formed on the at least one exhaust cam for actuating the exhaust valve to a second open position, wherein the EGR profile has a maximum cam lift from 117.0⁰ to 119.0⁰ and a cam lift duration from 75.5⁰ to 169.0⁰ relative to the exhaust centre line.

### Brief Description of the Drawings

The foregoing and other features and advantages of the present disclosure will be more fully understood from the following description of various embodiments, when read together with the accompanying drawings, in which:
Fig. 1 is an isometric view of a camshaft according to the present disclosure;
Fig. 2 is a side view of a camshaft according to the present disclosure;
Fig. 3 is a plan view of an exhaust cam according to the present disclosure;
Fig. 4 is a plan view of an intake cam according to the present disclosure.
Fig. 5 is the phase orientation of the intake and exhaust cams of the first embodiment according to the present disclosure;
Fig. 6 is the phase orientation of the intake and exhaust cams of the second embodiment according to the present disclosure; and
Fig. 7 is a schematic representation of an engine assembly according to the present disclosure.

### Detailed Description

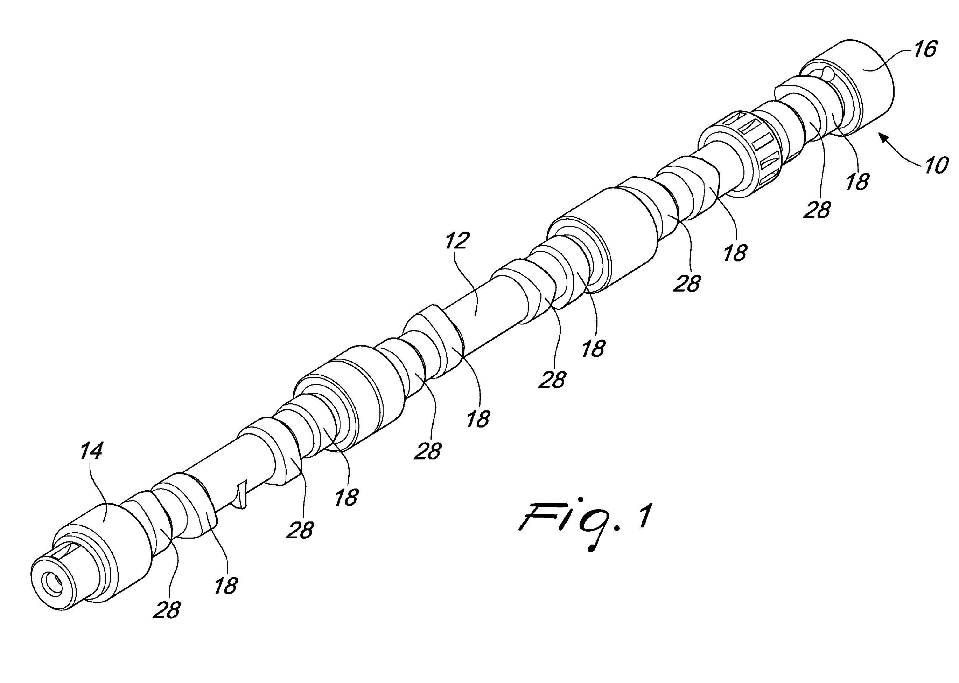

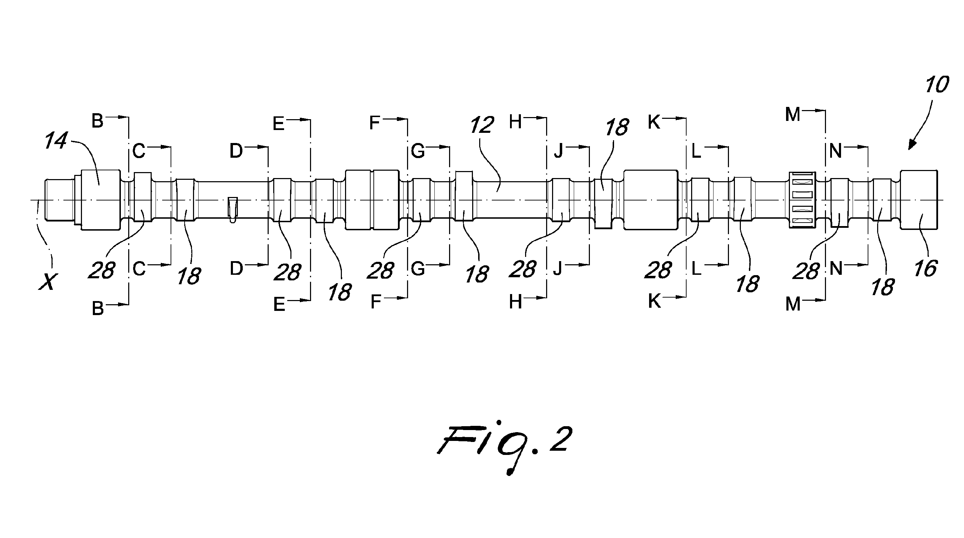

Figs. 1 and 2 illustrate a camshaft **10** for a diesel engine. The camshaft **10** may be disposed in a three-cylinder or six-cylinder diesel engine. The camshaft **10** may comprise a shaft body **12.** The shaft body **12** may have a rotational axis **X.** The shaft body **12** may have a first bearing **14** and a second bearing **16.** The camshaft **10** may be supported in an engine body by the first bearing **14** and the second bearing **16.** The shaft body **12** may comprise additional bearings.

The camshaft **10** may have at least one exhaust cam **18.** The exhaust cam **18** may be configured for actuating at least one exhaust valve. The exhaust valve may be provided in the diesel engine and may be moveable between a closed position and a first open position and between the closed position and a second open position. At the first open position the exhaust valve may have a greater valve lift relative to the valve lift at the second open position.

The exhaust cam **18** may extend radially from the shaft body **12.** The exhaust cam **18** may extend transversely to the rotational axis **X.** The exhaust cam **18** may be substantially perpendicular to the shaft body **12.** The exhaust cam **18** may have a varying profile surface at the periphery thereof. The profile surface of exhaust cam **18** may have varying distance from the surface of shaft body **12.** The exhaust cam **18** may be disposed between the first bearing **14** and the second bearing **16.**

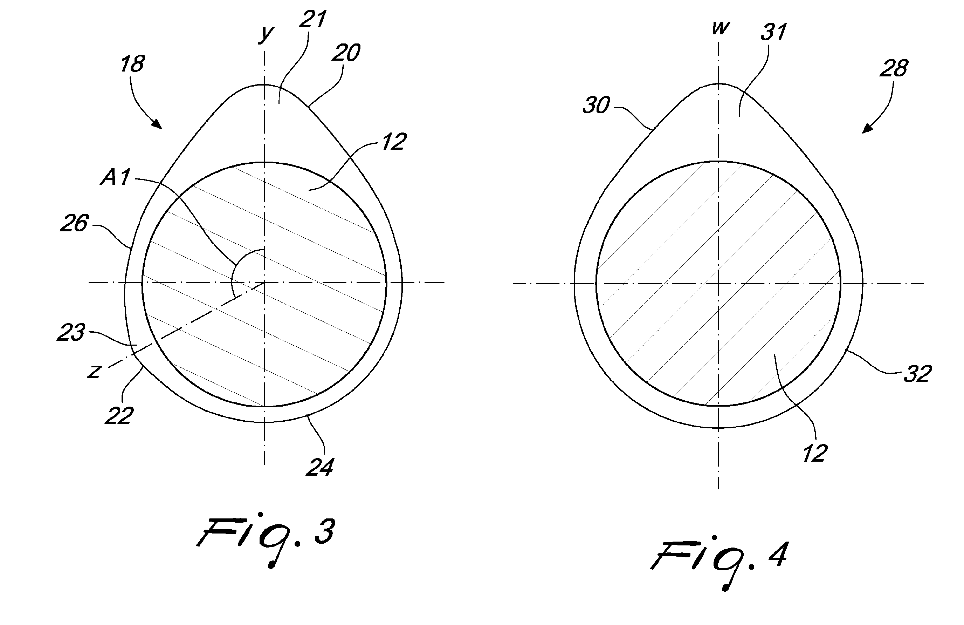

Fig. 3 illustrates a plan view of the exhaust cam, the exhaust cam **18** may have an exhaust profile **20** and an Exhaust Gas Recirculation (EGR) profile **22.** The exhaust profile **20** may be formed along a profile surface of the exhaust cam **18.** The EGR profile **22** may be formed along a profile surface of the exhaust cam **18.** Exhaust profile **20** and the EGR profile **22** may be active regions of the exhaust cam **18** that effect the actuation of the exhaust valve.

The exhaust cam **18** may further have a base profile **24.** Exhaust profile **20,** an EGR profile **22** and a base profile **24** may form a continuous profile surface at the periphery of the exhaust cam **18.**

Base profile **24** may be disposed between the exhaust profile **20** and the EGR profile **22.** The base profile **24** may form a circular arc in section and may be a constituent part of a circle that is arranged concentrically with respect to the shaft body **12.** The circular arc section may be a constituent part of a circle that is arranged concentrically with respect to the rotational axis **X** of the camshaft **10.** Base profile **24** may be an inactive region of the exhaust cam **18** that may not effect actuation of the exhaust valve.

The rise of the profile surface of the exhaust cam **18** from the base profile **24** may be defined as the cam lift. Cam lift may be the straight line distance from the base profile **24** or extension thereof to a point on the edge of the profile surface extending beyond the base profile **24.** The cam lift may be a straight line distance from a virtual extension of the base profile **24** to the free edge of the exhaust profile **20,** relative to the rest of the exhaust profile **20.** The virtual extension may be in a form of an arc line that continues in correspondence with the surface of the base profile._The cam lift may vary along the profile surface of the exhaust cam **18.** The cam lift along the base profile **24** may be 0mm.

The exhaust profile **20** may be configured for actuating the exhaust valve to the first open position. Exhaust profile **20** may be formed as a convex arc in section. Exhaust profile **20** may have an exhaust apex **21** that is substantially at the centre of the exhaust profile **20.** The exhaust profile **20** may extend further from the shaft body **12** than any point along the base profile **24** or the transition profile **26.** Exhaust profile **20** may have a cam lift at any point thereon.

An exhaust centre line **Y** may extend from the shaft body **12** to the exhaust apex **21.** The exhaust centre line **Y** may be perpendicular to the rotational axis **X.** Exhaust profile **20** may be substantially symmetrical about exhaust centre line **Y.**

Exhaust profile **20** may have a maximum cam lift about the exhaust apex **21.** The maximum cam lift may be the greatest straight line distance from the of the base profile **24** to the free edge of the exhaust profile **20,** relative to the rest of the exhaust profile **20.** The maximum cam lift may be the greatest straight line distance from a corresponding level of the base profile **24** on the exhaust profile **20,** to the free edge of the exhaust profile **20,** relative to the rest of the exhaust profile **20.** The maximum cam lift may be the greatest straight line distance from a virtual extension of the base profile **24** to the free edge of the exhaust profile **20,** relative to the rest of the exhaust profile **20.** The virtual extension may be in a form of an arc line that continues in correspondence with the surface of the base profile into the exhaust profile **20.**

The exhaust profile **20** may have a maximum cam lift disposed at about -1.0⁰ to 1.0⁰ relative to the exhaust centre line **Y.** In an embodiment, the maximum cam lift may be disposed at the intersection of the exhaust centre line **Y** and the exhaust apex **21.**

In an embodiment, the maximum cam lift may be disposed at the exhaust centre line **Y.** The cam lift of the exhaust profile **20** may decrease on either side from the exhaust centre line **Y.** The cam lift may decrease to the base profile **24** at an end of the exhaust profile **20.** In an embodiment, the cam lift may decrease to the cam lift of the transition profile **26** at an opposite end of the exhaust profile **20.**

The maximum cam lift may be from 6.8mm to 7.8mm. In a first embodiment, the maximum cam lift may be from 7.7mm to 7.8mm. In a second embodiment, the maximum cam lift may be from 6.8mm to 6.9mm.

With reference to Fig. 3, the continuous rise of the exhaust profile **20** along the exhaust cam **18** may be defined as the cam lift duration. In an embodiment, cam lift along the cam lift duration of the exhaust profile **20** may be greater than the cam lift along the transition profile **26.** Exhaust profile **20** may have a cam lift duration from -83.0⁰ to 79.0⁰ relative to the exhaust centre line **Y.**

With reference to Fig. 3, in a first embodiment, the exhaust profile **20** may have a cam lift duration from -75.5⁰ to 74.5⁰ relative to the exhaust centre line **Y.** With reference to Fig.3, in a second embodiment, the exhaust profile **20** may have a cam lift duration from -82.5⁰ to 78.5⁰ relative to the exhaust centre line **Y.**

With reference to Fig. 3, the cam lift duration may extend between the extreme end points of the exhaust profile **20.** At an end of the cam lift duration the exhaust profile **20** may be contiguous with the base profile **24.** At the opposite end of the cam lift duration the exhaust profile **20** may be contiguous with the EGR profile **22.** In an embodiment, at the opposite end of the cam lift duration the exhaust profile **20** may be contiguous with the transition profile **26.**

The EGR profile **22** may be configured for actuating the exhaust valve to the second open position. EGR profile **22** may be formed as a convex arc in section. EGR profile **22** may have an EGR apex **23** that is substantially at the centre of the EGR profile. The EGR profile **22** may extend further from the shaft body **12** than any point along the base profile **24** or the transition profile **26.** EGR profile **22** may have a cam lift at any point thereon.

An EGR centre line **Z** may extend from the shaft body **12** to the EGR apex **23.** The exhaust centre line **Z** may be perpendicular to the rotational axis **X.** EGR profile **22** may be substantially symmetrical about EGR centre line **Z.** The exhaust centre line **Y** and the EGR centre line **Z** may extend radially from the rotational axis **X.** The angle **A1** between the exhaust centre line **Y** and the EGR centre line **Z** may be from 117.5⁰ to 118.0⁰.

EGR profile **22** may have a maximum cam lift about the EGR apex **23.** The maximum cam lift may be the greatest straight line distance from the free edge of the base profile **24** relative to the free edge of the EGR profile **22,** to the rest of the EGR profile **22.** The maximum cam lift may be the greatest straight line distance from a corresponding level of the base profile **24** on the EGR profile **22,** to the free edge of the EGR profile **22,** relative to the rest of the EGR profile **22.** The maximum cam lift may be the greatest straight line distance from a virtual extension of the base profile **24** to the free edge of the EGR profile **22,** relative to the rest of the EGR profile **22.** The virtual extension may be in a form of an arc line that continues in correspondence with the surface of the base profile into the EGR profile **22.**

The EGR profile **22** may have a maximum cam lift disposed at about 117.0⁰ to 119.0⁰ relative to the exhaust centre line **Y.** In an embodiment, the maximum cam lift may be disposed at the intersection of the EGR centre line **Z** and the EGR apex **23.** In an embodiment, the maximum cam lift may be disposed at the intersection of the EGR centre line **Z.**

With reference to Fig. 3, in a first embodiment, the EGR profile **22** may have a maximum cam lift disposed at 118.0⁰ relative to the exhaust centre line **Y.** With reference to Fig. 3, in a second embodiment, the EGR profile **22** may have a maximum cam lift disposed at 117.5⁰ relative to the exhaust centre line **Y.**

The cam lift of the EGR profile **22** may decrease on either side from the EGR centre line **Z.** The cam lift may decrease to the base profile **24** at an end of the EGR profile **22.** In an embodiment, the cam lift may decrease to the transition profile **26** at an opposite end of the EGR profile **22.**

The maximum cam lift of the EGR profile may be from 1.1 mm to 1.3mm. With reference to Fig. 3, in a first embodiment, the maximum cam lift may be from 1.2mm to 1.3mm. With reference to Fig. 3, in a second embodiment, the maximum cam lift may be from 1.1mm to 1.2mm.

With reference to Fig. 3, the continuous rise of the EGR profile **22** along the exhaust cam **18** may be defined as the cam lift duration of the EGR profile **22.** The cam lift duration of the EGR profile may be from 75.5⁰ to 169.0⁰ relative to the exhaust centre line **Y.**

With reference to Fig. 3, in a first embodiment, the EGR profile **22** may have a cam lift duration from 76.0⁰ to 168.5⁰ relative to the exhaust centre line **Y.** With reference to Fig. 3, in a second embodiment, the EGR profile **22** may have a cam lift duration from 79.5⁰ to 156.5⁰ relative to the exhaust centre line **Y.**

With reference to Fig. 3, the cam lift duration of the EGR profile **22** may have a lower value with respect to the cam lift duration of the exhaust profile **20.**

The cam lift duration may extend between the extreme end points of the EGR profile **22.** At an end of the cam lift duration the EGR profile **22** may be contiguous with the base profile **24.** At the opposite end of the cam lift duration the EGR profile **22** may be contiguous with the exhaust profile **20.** In an embodiment, at the opposite end of the cam lift duration the EGR profile **22** may be contiguous with the transition profile **26.**

In an embodiment, the exhaust cam **18** may further have a transition profile **26.** Transition profile **26** may not actuate the exhaust valve. At the transition profile **26** the exhaust valve may remain closed. Transition profile **26** may be disposed between the exhaust profile **20** and the EGR profile **22** opposite the base profile **24.** Exhaust profile **20,** an EGR profile **22,** transition profile **26** and a base profile **24** may form a continuous profile surface at the periphery of the exhaust cam **18.** Transition profile **26** may be an inactive region of the exhaust cam **18** that may not effect actuation of the exhaust valve.

With reference to Fig. 3, The cam lift along the transition profile **26** may be similar to the cam lift along the base profile **24.** The cam lift along the transition profile **26** may be 0mm. The transition profile **26** may be arcuate in section. The transition profile **26** may be at 75⁰ - 79⁰ relative to the exhaust centre line **Y.** In the first embodiment, the transition profile **26** may be at 75⁰ - 75.5⁰ relative to the exhaust centre line **Y.** In the second embodiment, the transition profile **26** may be at 79⁰ relative to the exhaust centre line **Y.**

With reference to Figs. 1 and 2, the camshaft **10** may have at least one intake cam **28.** The intake cam **28** may be configured for actuating at least one intake valve. The intake valve may be provided in the diesel engine.

The intake cam **28** may extend radially from the shaft body **12.** The intake cam **28** may extend transversely to the rotational axis **X.** The intake cam **28** may be substantially perpendicular to the shaft body **12.** Intake cam **28** may have a varying profile surface at the periphery thereof. The profile surface of intake cam **28** may have varying distance from the surface of shaft body **12.** The intake cam **28** may be disposed between the first bearing **14** and the second bearing **16.** The intake cam **28** may be axially spaced from the exhaust cam **18.**

Fig. 4 illustrates a plan view of the intake cam **28.** The intake cam **28** may have an intake profile **30.** The intake profile **30** may be formed along a periphery of the intake cam **28.** The intake profile **30** may be the active region of the intake cam **28** for actuation of the intake valve. The intake cam **28** may further have a base profile **32.** Intake profile **30** and base profile **32** may form a continuous profile surface at the periphery of the intake cam **28.**

The rise of the profile surface of the intake cam **28** from the base profile **24** may be defined as the intake cam lift. Cam lift may be the straight line distance from base profile **32** or extension thereof to a point on the edge of the profile surface extending beyond the base profile **32.The** cam lift may vary along the profile surface of the intake cam **28.** The cam lift along the base profile **32** may be 0mm.

The base profile **32** may form a circular arc in section and may be a constituent part of a circle that is arranged concentrically with respect to the shaft body **12.** The circular arc section may be a constituent part of a circle that is arranged concentrically with respect to the rotational axis **X** of the camshaft **10.** Base profile **32** may be an inactive region of the intake cam **28** and may not actuate the intake valve.

The intake profile **30** may be configured for actuating the intake valve to an open position. Intake profile **30** may be formed as a convex arc in section. Intake profile **30** may have an intake apex **31** that is substantially at the centre of the intake profile **30.** The cam lift at any point along the intake profile **30** may be greater than the cam lift at any point along the base profile **32.**

An intake centre line **W** may extend from the shaft body **12** to the intake apex **31.** The intake centre line **W** may be perpendicular to the rotational axis **X.** Intake profile **30** may be substantially symmetrical about intake centre line **W.**

Intake profile **30** may have a maximum cam lift about the intake apex **31.** The maximum cam lift may be the greatest straight line distance from the of the base profile **32** to the edge of the profile surface of the intake cam **28,** relative to the rest of the intake profile **30.** The maximum cam lift may be the greatest straight line distance from a corresponding level of the base profile **32** on the intake profile **30,** to the free edge of the intake profile **30,** relative to the rest of the intake profile **30.** The maximum cam lift may be the greatest straight line distance from a virtual extension of the base profile **32** to the free edge of the intake profile **30,** relative to the rest of the intake profile **30.** The virtual extension may be in a form of an arc line that continues in correspondence with the surface of the base profile **32** into the intake profile **30.**

The intake profile **30** may have a maximum cam lift disposed at about -1.0⁰ to 1.0⁰ relative to the intake centre line **W.** In an embodiment, the maximum cam lift may be disposed at the intersection of the intake centre line **W** and the intake apex **31.** In an embodiment, the maximum cam lift may be disposed at the intake centre line **W.** The cam lift of the intake profile **30** may decrease on either side from the intake centre line **W.**

The maximum cam lift may be from 5.1mm to 7.0mm. In a first embodiment, the maximum cam lift may be from 6.9mm to 7. 0mm. In a second embodiment, the maximum cam lift may be from 5.1mm to 5.2mm.

The continuous rise of the intake profile **30** along the intake cam **28** may be defined as the cam lift duration. Intake profile **30** may have a cam lift duration from -76.5⁰ to 80.0⁰ relative to the intake centre line **W.**

In a first embodiment, the intake profile **30** may have a cam lift duration from - 66.5⁰ to 66.5⁰ relative to the intake centre line **W.** In a second embodiment, the intake profile **30** may have a cam lift duration from -76.0⁰ to 79.5⁰ relative to the intake centre line **W.**

The cam lift duration may extend between the extreme end points of the intake profile **30.** At an end of the cam lift duration the intake profile **30** may be contiguous with the base profile **32.**

The angle between the intake centre line **W** and the exhaust centre line **Y** may range from 105⁰ to 106⁰. In the first embodiment, the angle between the intake centre line **W** and the exhaust centre line **Y** is 106⁰. In the second embodiment, the angle between the intake centre line **W** and the exhaust centre line **Y** is 105⁰.

The angle between the centre line of the intake profile and the EGR centre line Z may range from -12.5⁰ to -12⁰. In the first embodiment, the angle between the centre line of the intake profile and the EGR centre line **Z** is -12⁰. In the second embodiment, the angle between the centre line of the intake profile and the EGR centre line **Z** is -12.5⁰.

With respect to Figs. 1 and 2, the camshaft **10** may comprise a plurality of exhaust cams **18** that are axially spaced on the shaft body **12** for actuating respective exhaust valves. The camshaft **10** may comprise a plurality of intake cams **28** for actuating respective intake valves. The intake cams **28** may be disposed between the exhaust cams **18.** In an embodiment, the camshaft **10** may have three exhaust cams **18** and three intake cams **28.** In an embodiment, the camshaft **10** may have six exhaust cams **18** and six intake cams **28.** The exhaust cams **18** and intake cams **28** may be alternately disposed on the shaft body **12.**

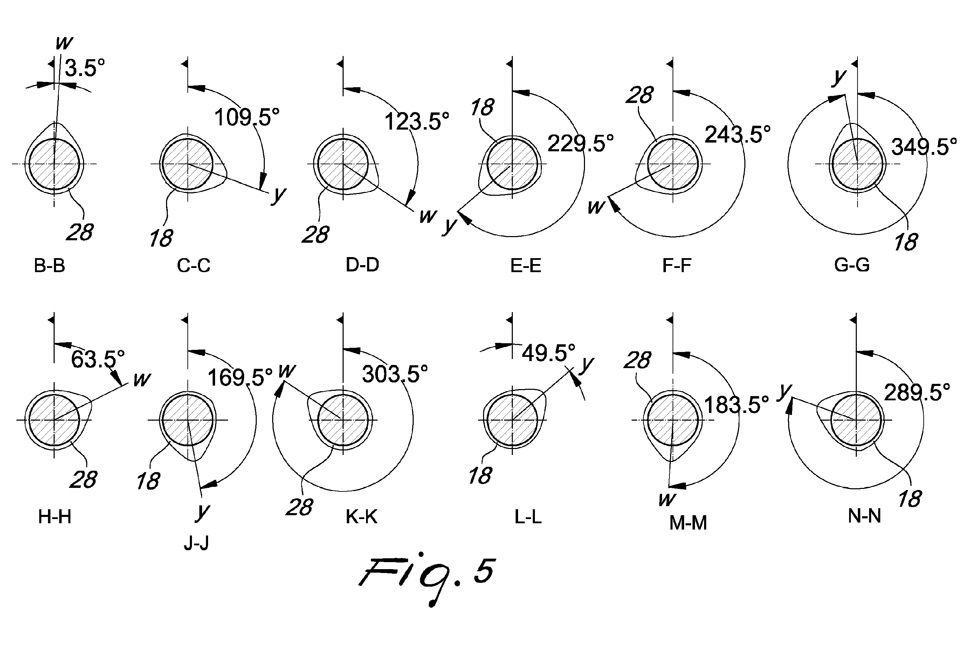

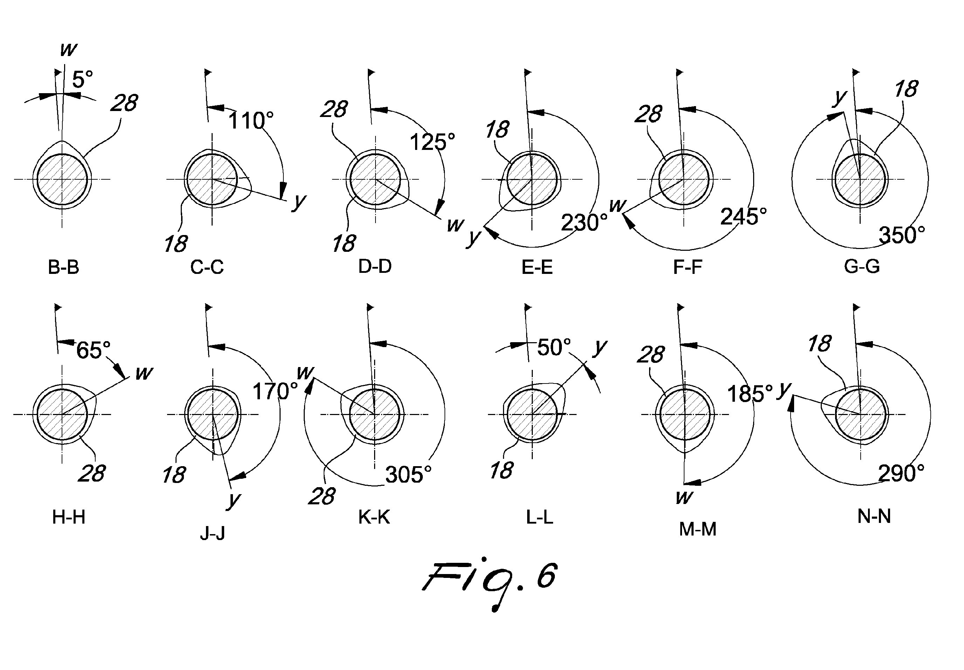

Figs. 5 and 6 illustrate the phasing of the camshaft **10** in respect to the firing order of the six-cylinder diesel engine. The phasing of the intake and exhaust cams **28, 18** may be consistent with the firing order of the engine. Fig. 5 illustrates the phase orientation of the intake cams **28** and exhaust cams **18** of the first embodiment. The first intake cam **28** may have an intake centre line **W** that is positioned 3.5⁰ relative to the centre line of the keyway. Each subsequent intake cam **28** may be phased at 120⁰ from the previous intake cam **28.** The first exhaust cam **18** may have an exhaust centre line **Y** that is positioned 109.5⁰ relative to the centre line of the keyway. Each subsequent exhaust cam **18** may be phased at 120⁰ from the previous exhaust cam **18.**

Fig. 6 illustrates the phase orientation of the intake cams **28** and exhaust cams **18** of the second embodiment. The first intake cam **28** may have an intake centre line **W** that is positioned 5⁰ relative to the centre line of the keyway. Each subsequent intake cam **28** may be phased at 120⁰ from the previous intake cam **28.** The first exhaust cam **18** may have an exhaust centre line **Y** that is positioned 110⁰ relative to the centre line of the keyway. Each subsequent exhaust cam **18** may be phased at 120⁰ from the previous exhaust cam **18.**

The diesel engine may comprise a cylinder head including air inlet ports and exhaust outlet ports. Each cylinder in the diesel engine may have an air inlet port and an exhaust outlet port. The diesel engine may comprise valve assemblies associated with the air inlet port and the exhaust outlet port.

The camshaft **10** may have one or more intake cams **28** and exhaust cams **18** for engaging intake and exhaust valve assemblies in the engine. The intake cams **28** and exhaust cams **18** may be formed as separate parts and mounted onto the outer peripheral surface of the shaft body **12.** In an embodiment, the intake cams **28** and exhaust cams **18** may be integrally formed with the shaft body **12.** As the camshaft **10** is rotated, the cams may be moved into and out of engagement with the intake and exhaust valve assemblies so as to actuate the intake and exhaust valves.

An intake valve assembly may be associated with the air inlet port. The intake assembly may comprise the intake valve to regulate the flow of air between the cylinder and an intake manifold. An exhaust valve assembly may be associated with the exhaust outlet port. The exhaust valve assembly may comprise the exhaust valve to regulate the flow of exhaust gas between the cylinder and an exhaust manifold. The intake and exhaust valves may be spring biased to the closed position. The intake and exhaust assemblies may further comprise rocker arms that engage the intake and exhaust valves. The intake and exhaust valves may be actuated to the open position by the respective rocker arms.

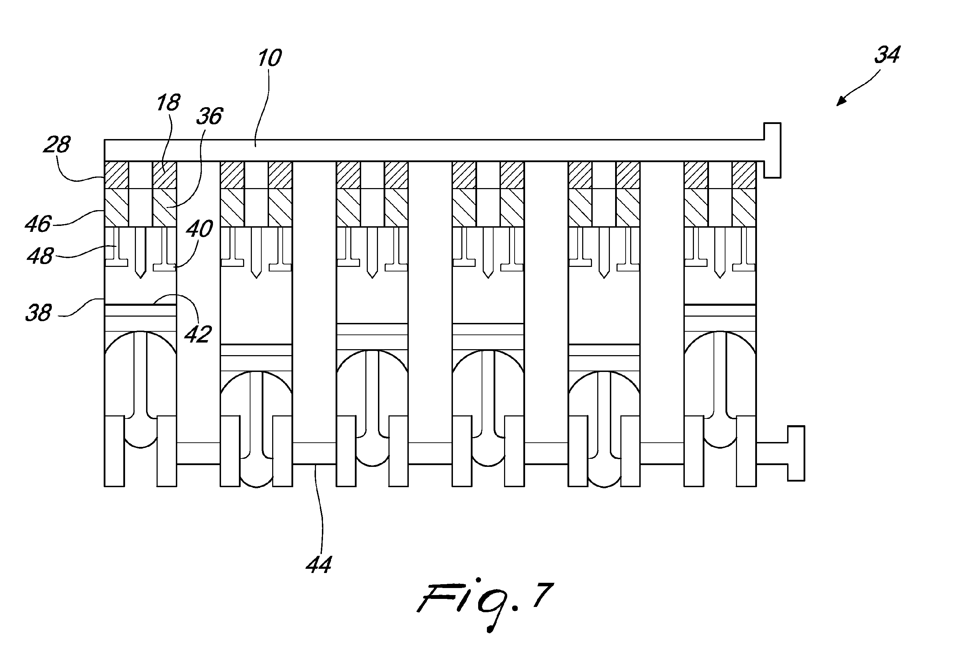

Fig. 7 is a schematic representation of an engine assembly **34** for a diesel engine. The skilled person would appreciate that the engine assembly **34** may be modified to include other features such as rocker arms and push rods. The engine assembly **34** may include the aforementioned camshaft **10.** The diesel engine may be a three-cylinder or a six-cylinder diesel engine. The engine assembly may comprise at least one exhaust valve assembly **36** in communication with a cylinder **38.** The exhaust valve assembly **36** may comprise an exhaust valve **40.** The camshaft **10** may comprise a shaft body **12** having a rotational axis **X.** At least one exhaust cam **18** may be provided for actuating the exhaust valve **40.** The exhaust cam **18** may extend radially from the shaft body **12** transversely to the rotation axis **X.** An exhaust profile **20** may be formed on the exhaust cam **18** for actuating the exhaust valve **40** to a first open position and an EGR profile **22** formed on the exhaust cam **18** for actuating the exhaust valve **40** to a second open position. The EGR profile may have a maximum cam lift disposed at about 117.0⁰ to 119.0⁰ and a cam lift duration disposed about 75.5⁰ to 169.0⁰ relative to the exhaust centre line **Y.**

The engine assembly **34** may further comprise a crankshaft **44** for moving a piston **42** in the cylinder **38** associated with the exhaust valve **40.** The crankshaft **44** may have a crank angle from 481⁰ to 485⁰ when the exhaust valve **40** is at the second open position. The crankshaft **44** may have a range of crank angles from 429⁰ to 537⁰ over the duration the exhaust valve **40** is actuated by the EGR profile **22.** The crankshaft **44** may have a range of crank angles from 118⁰ to 374⁰ over the duration the exhaust valve **40** is actuated by the exhaust profile **20.**

The engine assembly **34** may further comprise at least one intake valve assembly **46** in communication with the cylinder **38.** The intake valve assembly **46** may comprise the intake valve **48.** At least one intake cam **28** may extend radially from the shaft body **12** transversely to the rotational axis **X.** The intake cam **28** may have an intake profile **30** for actuating the intake valve **48** wherein the intake profile **30** may have a cam lift duration from -76.5⁰ to 80.0⁰ relative to the exhaust centre line **Y.** The crankshaft **44** may have a range of crank angles from 344⁰ to 574⁰ over the duration the intake valve is actuated by the intake profile **30.**

The exhaust valve **40** may be actuated to open when either the exhaust profile **20** or the EGR profile **22** engages the exhaust valve assembly **36.** The exhaust valve **40** may be lifted from the valve seat at a valve lift that corresponds to the cam lift of either the exhaust profile **20** or the EGR profile **22.** The exhaust valve **40** may be lifted from the valve seat for a duration that corresponds to the cam lift duration of either the exhaust profile **20** or the EGR profile **22.**

The exhaust valve **40** may have a maximum valve lift of between 1.4mm to 1.5mm at the second open position. The exhaust valve **40** may have a maximum valve lift of 1.4mm at the second open position. The exhaust valve **40** may have minimum valve lift at the extreme end points of either the exhaust profile **20** or the EGR profile **22.** The exhaust valve **40** may not have any valve lift at the base profile **24** or the transition profile **26.** The maximum valve lift of the exhaust valve **40** may correspond with crank angle range of 481⁰ to 485⁰. The valve lift of the intake valve **48** may range from 9.6mm to 9.9mm with crank angle range of 481⁰ to 485⁰.

The intake valve **48** may be actuated to open when the intake profile **30** engages the intake valve assembly **46.** The intake valve **48** may be lifted from the valve seat at a valve lift that corresponds to the cam lift of the intake profile **30.** The intake valve **48** may be lifted from the valve seat for a duration that corresponds to the cam lift duration of the intake profile **30.**

The intake valve **48** may have a maximum valve lift of 10.3mm to 10.4mm. The intake valve **48** may have minimum valve lift at the extreme end points of either the intake profile **30.** The intake valve **48** may not have any valve lift at the base profile **32.** The maximum valve lift of the intake valve **48** may correspond with crank angle range of 455⁰ to 462⁰. The valve lift of the exhaust valve **40** may range from 0.8mm to 1.1mm with crank angle range of 455⁰ to 462⁰.

The foregoing crankshaft angles may be based on the piston in the cylinder being at top dead centre on the compression stroke. The crankshaft angles may be derived through manual cranking of engine. Valve lift may be measured at each crankshaft angular position. The aforementioned crank angles are provided with respect to the single cylinder **38** that is associated with the piston **42.** The skilled person would appreciate that corresponding angles of the other cylinders may be based on the firing order of the engine.

The skilled person would appreciate that foregoing embodiments may be modified or combined to obtain the camshaft **10** of the present disclosure.

### Industrial Applicability

This disclosure describes a camshaft **10** for a diesel engine. The camshaft **10** may improve management of nitrogen oxide emission levels. The camshaft **10** may enable generation of suitable level of combustion residuals for the control of nitrogen oxide levels while minimising impact of the engine transient response. An improved engine transient response may be obtained through the reduction of residuals in a combustion cycle during lower engine speeds while maintaining sufficient residuals at higher engine speeds.

The EGR profile on the exhaust lobe of the camshaft **10** may enable return flow of exhaust gas into a combustion cylinder of the engine. The amount of residuals in the combustion cylinder may be determined by the profile of the EGR profile which determines the amount of exhaust gas returned into the cylinder. The EGR profile may actuate the exhaust valve to provide exhaust gas flow to the combustion chamber. The EGR profile may actuate the exhaust valve to enable flow of exhaust gas to the combustion chamber during the intake stroke.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A camshaft (10) for a diesel engine, the camshaft (10) comprising:
a shaft body (12) having a rotational axis (X),
at least one exhaust cam (18) for actuating an exhaust valve; the at least one exhaust cam (18) extending radially from the shaft body (12) transversely to the rotational axis (X);
an exhaust profile (20) formed on the at least one exhaust cam (18) for actuating the exhaust valve to a first open position, the exhaust profile (20) having an exhaust centre line (Y); and
an EGR profile (22) formed on the at least one exhaust cam (18) for actuating the exhaust valve to a second open position,
wherein the EGR profile (22) has a maximum cam lift from 117.0⁰ to 119.0⁰ and a cam lift duration from 75.5⁰ to 169.0⁰ relative to the exhaust centre line (Y).

2. The camshaft (10) of claim 1 further comprising at least one intake cam (28) extending radially from the shaft body (12) transversely to the rotational axis (X), the at least one intake cam (28) having an intake profile (30) for actuating at least one intake valve wherein the intake profile (30) has a cam lift duration from -76.5⁰ to 80.0⁰ relative to the intake centre line (W).

3. The camshaft (10) of claim 2 wherein the angle between the intake centre line (W) and the exhaust centre line (Y) ranges from 105⁰ to 106⁰.

4. The camshaft (10) of claims 2 or 3 wherein the angle between the intake centre line (W) and an EGR centre line (Z) ranges from -12.5⁰ to -12⁰.

5. The camshaft (10) of any one of preceding claims wherein the EGR profile has a maximum cam lift at 118.0⁰ and a cam lift duration from 76.0⁰ to 168.5⁰ relative to the exhaust centre line (Y).

6. The camshaft (10) of any one of preceding claims wherein the EGR profile has a maximum cam lift at 117.5⁰ and a cam lift duration from 79.5⁰ to 157.5⁰ relative to the exhaust centre line (Y).

7. The camshaft (10) of any one of preceding claims wherein the exhaust profile has a maximum cam lift from -1.0⁰ to 1.0⁰ and a cam lift duration from -83.⁰ to 79.0⁰ relative to the exhaust centre line (Y).

8. The camshaft (10) of any one of preceding claims wherein the angle (A1) between the exhaust centre line (Y) and an EGR centre line (Z) is from 117.5⁰ to 118.0⁰.

9. The camshaft (10) of any one of preceding claims further comprising a transition profile (26) between 75⁰ to 79⁰ relative to the exhaust centre line (Y).

10. An engine assembly for a diesel engine, the engine assembly comprising:
at least one exhaust valve assembly in communication with a cylinder, the at least one exhaust valve assembly comprising an exhaust valve; and
a camshaft (10) according to claim 1.

11. The engine assembly of claim 10 further comprising a crankshaft for moving a piston in the cylinder wherein the crankshaft has a crank angle from 481⁰ to 485⁰ when the exhaust valve is at the second open position.

12. The engine assembly of claim 11 wherein the exhaust valve has a maximum valve lift of between 1.4mm to 1.5mm at the second open position.

13. The engine assembly of claim 11 or 12 wherein the crankshaft has a range of crank angles from 429⁰ to 537⁰ over the duration the exhaust valve is actuated by the EGR profile (22) and a range of crank angles from 118⁰ to 374⁰ over the duration the exhaust valve is actuated by the exhaust profile (20).

14. The engine assembly of claims 11, 12 or 13 further comprising at least one intake valve assembly in communication with the cylinder, the at least one intake valve assembly comprising an intake valve and at least one intake cam (28) extends radially from the shaft body (12) transversely to the rotation axis, the at least one intake cam (28) having an intake profile (30) for actuating at least one intake valve wherein the intake profile (30) has a cam lift duration from -76.5⁰ to 80.0⁰ relative to the intake centre line (W).

15. The engine assembly of claim 14 wherein the crankshaft has a range of crank angles from 344⁰ to 574⁰ over the duration the intake valve is actuated by the intake profile (30) and wherein the intake valve has a maximum valve lift of 10.3mm to 10.4mm.
